# EUROPEAN PATENT APPLICATION

(11) **EP 3 059 816 A1**
(43) Date of publication of application: **24.08.2016**
(21) Application number: 15155859.0
(22) Date of filing: 20.02.2015
(51) Int. Cl.: H02G 3/08

(54) **Mounting box**

(71) Applicant: ABB Oy, 00380 Helsinki (FI)
(72) Inventor: Andersson, Johan, 06100 Porvoo (FI); Luomi, Juho, 06100 Porvoo (FI); Tervo, Pekka, 06100 Porvoo (FI)
(74) Representative: Kolster Oy Ab

(57) **Abstract**

A mounting box adapted to be installed into an opening in a wall by pushing the mounting box into the opening from a first side of the wall. The mounting box comprises a box case (2) defining a mounting space for accommodating an electrical component, and having a box opening (22) providing in use an access into the mounting space from the first side (41) of the wall (4), and collar means (6) attached to the box case (2) and adapted to be in contact with the first side (41) of the wall (4), the collar means (6) defining a collar plane adapted to be parallel to a wall plane defined by the wall (4). The box case (2) comprises connection means for laterally connecting the mounting box to adjacent identical mounting boxes, the connection means being an integral part of the box case (2).

## Description

### FIELD OF THE INVENTION

The present invention relates to a mounting box.

A known mounting box, or an installation box, comprises a box case and collar means attached to the box case, the mounting box being adapted to be installed into an opening in a wall by pushing the mounting box into the opening from a first side of the wall such that the collar means comes into contact with the first side of the wall, a mounting space of the mounting box being accessible from the first side of the wall through a box opening of the mounting box. The collar means allows retrofitting the mounting box into an opening in a wall from a first side of the wall.

Sometimes it is necessary to connect mounting boxes laterally to each other such that the connected adjacent mounting boxes are located side by side. It is known in the art to laterally connect adjacent mounting boxes with separate connection elements. The separate connection elements allow installing mounting boxes in groups where a mounting box is laterally connected to four adjacent mounting boxes. However, the known separate connection elements make connecting of adjacent mounting boxes a rather complex process.

### BRIEF DESCRIPTION OF THE INVENTION

An object of the present invention is to simplify lateral connection of retrofit mounting boxes.

The objects of the invention are achieved by a mounting box which is characterized by what is stated in the independent claim. The preferred embodiments of the invention are disclosed in the dependent claims.

The invention is based on the idea of providing a retrofit mounting box with integral connection means for laterally connecting the mounting box to adjacent identical mounting boxes.

An advantage of the mounting box of the invention is that the mounting box is adapted to be laterally connected to adjacent identical mounting boxes without any separate connection elements.

### BRIEF DESCRIPTION OF THE DRAWINGS

In the following the invention will be described in greater detail by means of preferred embodiments with reference to the attached drawings, in which
Figure 1 shows a mounting box according to an embodiment of the invention;
Figure 2 shows four mounting boxes connected to each other, each of the mounting boxes being identical to the mounting box of Figure 1;
Figure 3 shows an axonometric projection of the mounting boxes of Figure 2;
Figure 4 shows the mounting boxes of Figure 3 inserted into an opening in a wall;
Figure 5 shows the assembly of Figure 4 as seen from below; and
Figure 6 shows five mounting boxes connected to each other, each of the mounting boxes being identical to the mounting box of Figure 1.

### DETAILED DESCRIPTION OF THE INVENTION

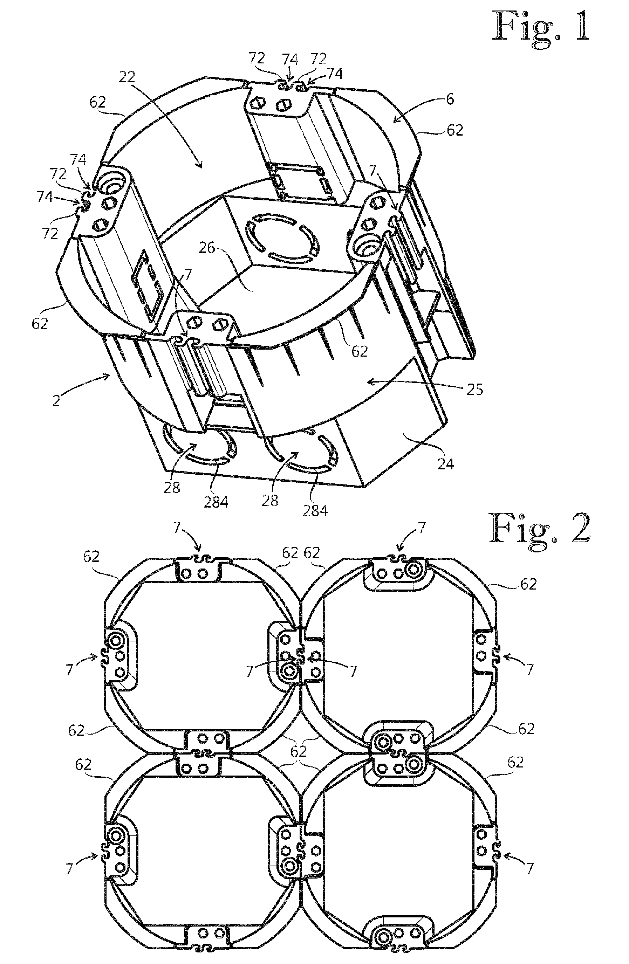

Figure 1 shows a retrofit mounting box adapted to be installed into an opening in a wall. The mounting box comprises a box case 2 and collar means 6 attached to the box case 2. The box case 2 comprises connection means for laterally connecting the mounting box to adjacent identical mounting boxes. The box case 2 defines a mounting space for accommodating an electrical component such as a wall socket or a light switch, and has a box opening 22 providing an access into the mounting space. The box case 2 comprises a side wall 24 defining a lateral boundary of the mounting space, and a bottom wall 26 defining an axial boundary of the mounting space. The side wall 24 comprises installation apertures 28 adapted to provide a passage for electric wires between exterior of the box case 2 and the mounting space. The collar means 6 comprises four collar members 62. The collar means 6 defines a collar plane adapted to be parallel to a wall plane defined by the wall.

The connection means is an integral part of the box case 2. The connection means of the box case 2 comprises four connection members 7. The connection members 7 are evenly spaced along the periphery of the mounting box such that the connection members 7 are spaced at regular 90° intervals along the periphery of the mounting box. The connection members 7 and the collar members 62 alternate along the periphery of the mounting box such that between each two peripherally adjacent connection members 7 there is a collar member 62.

The collar means 6 is an integral part of the box case 2. In an alternative embodiment the collar means is a separate means attached to the box case.

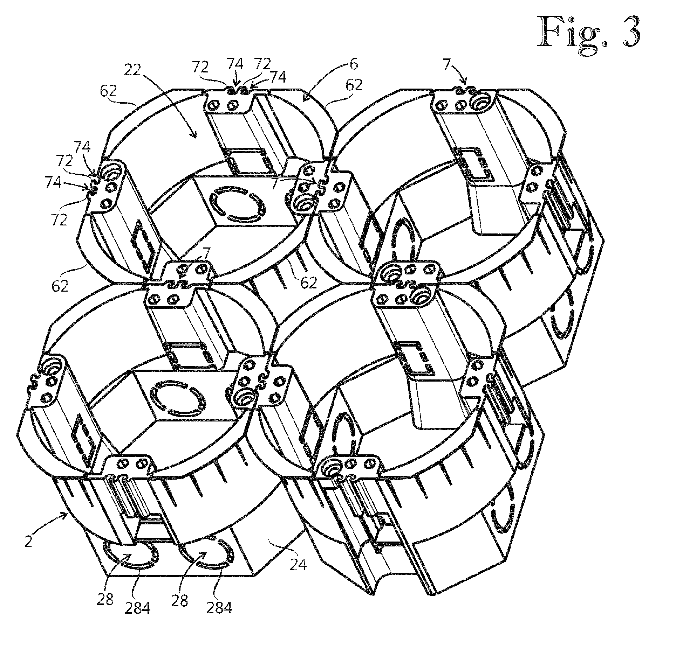

Figure 2 shows four mounting boxes laterally connected to each other, each of the mounting boxes being identical to the mounting box of Figure 1. In Figure 2 a normal of the image plane is parallel to the axial direction of the mounting boxes. Figure 3 shows an axonometric projection of the mounting boxes of Figure 2.

A lateral connection between two mounting boxes means connection which prevents mutual lateral movement of the mounting boxes. In Figure 2, movement of each mounting box is prevented relative to the other three mounting boxes in directions parallel to the image plane. The lateral connection between two mounting boxes is established by moving the mounting boxes in axial direction with relation to each other such that the connection members thereof come into contact.

Figure 2 shows that the connection means and the collar means 6 are located such that the collar plane of each mounting box coincides with the collar planes of the three adjacent mounting boxes. The collar members 62 of adjacent mounting boxes do not overlap even partially. All four mounting boxes are located axially in the same position.

An axial dimension of the connection means is greater than an axial dimension of the collar means 6. Figure 1 shows that the axial dimension of each connection member 7 is more than ten times the axial dimension of each collar members 62. In many embodiments collar means is not allowed to be thick. As regards the connection members, greater axial dimension basically improves the lateral connection between adjacent mounting boxes. In most embodiments an axial dimension of the connection means is at least 200 % greater than an axial dimension of the collar means.

Each connection member 7 comprises two connection projections 72 and two connection recesses 74 compatible with the two connection projections 72. A cross-section of each connection projection 72 is substantially L-shaped comprising a proximal portion extending roughly in lateral direction from the rest of the box case 2, and a distal portion extending in a great angle with relation to the proximal portion, the great angle being approximately 90°.

In alternative embodiments each connection member comprises at least one connection projection and at least one connection recess compatible with the at least one connection projection. There is a great number of known connection means suitable for the present invention. For example a dovetail joint has been known for ages.

Herein an axial direction of a mounting box is perpendicular to the collar plane. A lateral direction of the mounting box is a direction perpendicular to an imaginary center axis of the box case 2. The imaginary center axis is perpendicular to the collar plane, and traverses the bottom wall 26 of the box case 2 in the middle of the bottom wall 26. The bottom wall 26 of the box case 2 is located at a distance from the collar plane in the axial direction. The side wall 24 extends substantially perpendicular to the lateral direction.

When a connection member 7 of a mounting box is connected to a connection member of an adjacent identical mounting box, co-operation between the connection members prevents relative movement of the mounting boxes in lateral direction, or in direction parallel to a line extending from the imaginary center axis of the box case 2 to the connection member 7.

The mounting box comprises four peripheral connection portions and four peripheral collar portions on the periphery of the mounting box. Each peripheral connection portion comprises a connection member 7, and each peripheral collar portion comprises a collar member 62 such that in each of the peripheral connection portions, a corresponding connection member 7 forms the outermost part of the mounting box in the lateral direction, and in each of the peripheral collar portions a corresponding collar member 62 forms the outermost part of the mounting box in the lateral direction.

The peripheral collar portions are identical with each other. Each collar member 62 extends further from the imaginary center axis of the box case 2 than any of the connection members 7.

The mounting box of Figure 1 is adapted to be installed into a circular opening in a wall such that the diameter of the circular opening is substantially equal to the maximum diameter of the box case 2. Figure 1 shows that a cross-section of an upper portion 25 of the box case 2 is substantially circular, and the connection members 7 are located within the circle defined by the cross-section of the upper portion 25. The upper portion 25 of the box case 2 is located adjacent the collar means 6 in axial direction. The installation apertures 28 are provided on a lower portion of the box case 2 located further from the collar means 6 than the upper portion 25.

Each installation aperture 28 is blocked by a removable shield plug 284. Each removable shield plug 284 is an integral part of the box case 2. Each removable shield plug 284 is adapted to be cut off in order to enable introducing of an elongated electric installation member into corresponding installation aperture 28. Cutting off the removable shield plug 284 is easy since the removable shield plug 284 is only supported to rest of the box case 2 through four narrow supporting members. Idea is that an electrician removes required number of removable shield plugs 284 while the rest removable shield plugs protect the mounting space against dirt and foreign bodies.

The mounting box is adapted to be installed into an opening in a wall by pushing the mounting box into the opening in the wall from a first side of the wall. In use the collar means 6 is adapted to be in contact with the first side of the wall, in the vicinity of the edge of the opening. The collar means 6 projects from the box case 2 in lateral direction. The maximum diameter of the collar means 6 is greater than the maximum diameter of the box case 2 such that the collar means 6 is capable of engaging an edge of an opening through which the box case 2 fits. In other words, the collar means 6 is adapted to prevent the mounting box from sinking completely into the opening in the wall.

The collar means 6 extend further in the axial direction than the connection means such that when the collar means 6 is in contact with the first side of the wall, the connection means is flush with a plane defined by the first side of the wall. In an alternative embodiment the connection means are located axially below a plane defined by a bottom side of the collar means, the bottom side being the side of the collar means adapted to be in contact with the first side of the wall.

The mounting box is adapted to be pushed into the opening in the wall in an installation direction which is parallel to the axial direction. The mounting box is adapted to be pushed into the opening the bottom wall 26 first such that the collar plane is substantially parallel to the wall plane.

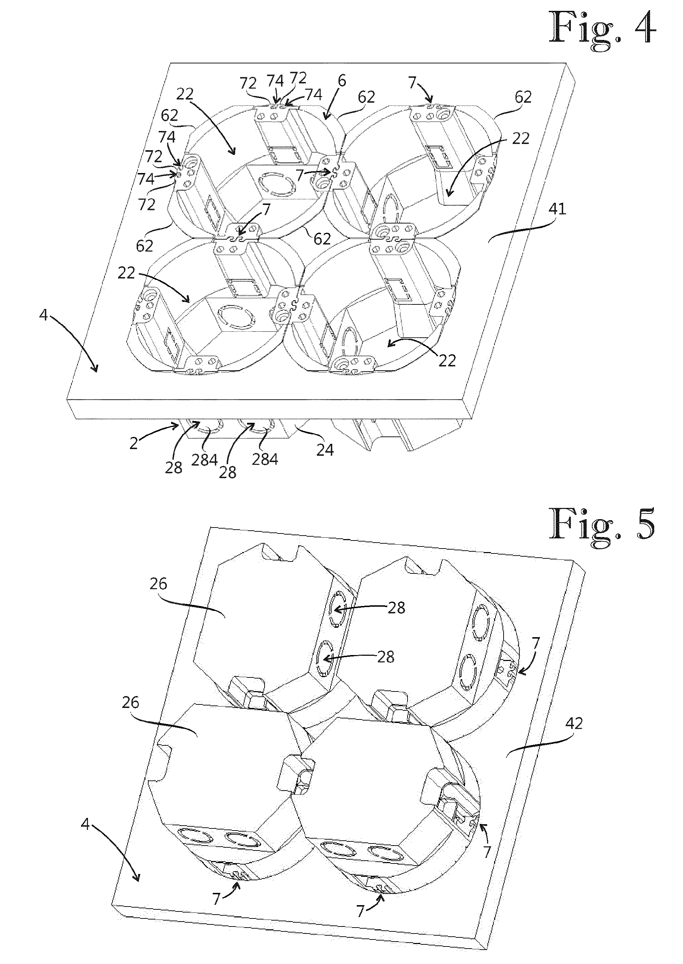

Figure 4 shows the mounting boxes of Figure 3 inserted into an opening in a wall 4. Figure 4 shows the mounting box assembly from a first side 41 of the wall 4. Figure 5 shows the assembly of Figure 4 as seen from below, or from a second side 42 of the wall 4. The second side 42 of the wall 4 faces opposite direction relative to the first side 41 of the wall 4.

In Figure 4 the mounting boxes have been pushed into their final mounting depth wherein the collar members 62 of each of the mounting boxes are in contact with the first side 41 of the wall 4. The mounting space of each of the mounting boxes is accessible from the first side 41 of the wall 4 through corresponding box opening 22. The installation apertures 28 are located on the second side 42 of the wall 4.

When a plurality of mounting boxes is installed into an opening in a wall, the individual installation openings intersect in order to enable the co-operation between the connection members. Therefore a plurality of interconnected mounting boxes is installed into a single unbroken opening. For providing the assembly of Figure 4, it is possible first to connect the four mounting boxes to each other and subsequently push the interconnected group of mounting boxes into an opening in a wall.

Figures 2 to 5 show a cluster of four mounting boxes. The cluster comprises two columns of mounting boxes, each column having two mounting boxes connected to each other with the connection means. The two columns are connected together with the connection means such that each mounting box is connected to two adjacent mounting boxes. Size of the cluster is two by two mounting boxes.

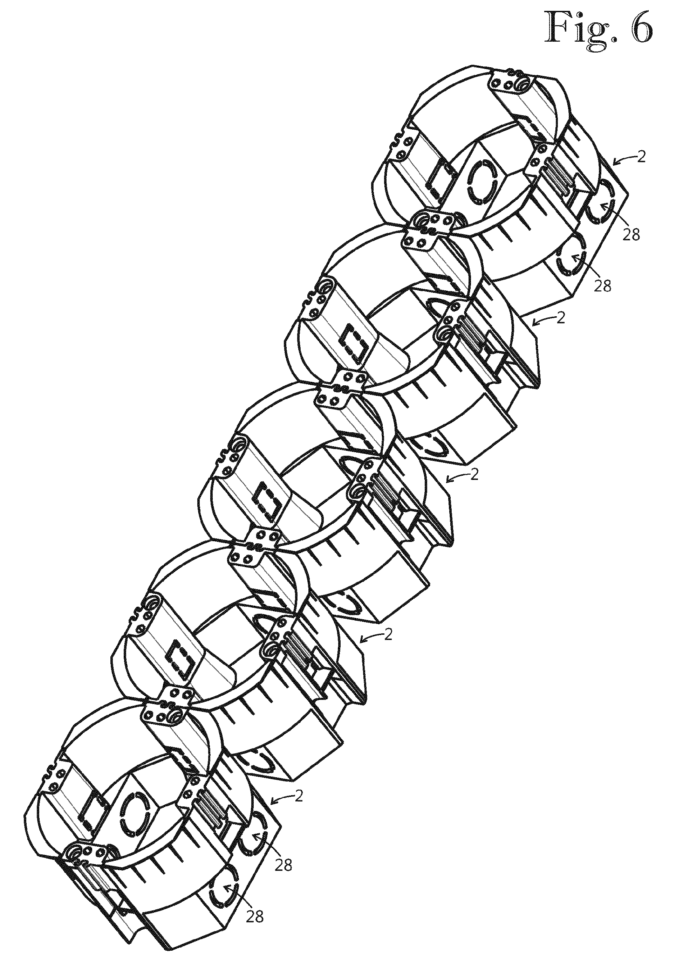

The connection means allows forming of clusters of unlimited size. Figure 6 shows a column of five mounting boxes. It is also possible to form much longer columns. Further, it is possible to connect columns of any size side by side. For example, it is possible to form clusters of three by five or six by six, for example.

The connection means is manufactured from the same material as the box case 2. In an embodiment the entire mounting box is manufactured from same plastic material with a single moulding process such as an injection moulding process.

In alternative embodiments a mounting box according to present invention is provided with a fastening mechanism for fastening the mounting box into an opening in a wall. In an embodiment the fastening mechanism comprises at least one screw hole in the box case or the collar means, the at least one screw hole being adapted to receive a screw for fastening the mounting box to a wall by screwing the threaded part of the screw into the wall while the screw is received in the screw hole of the mounting box. In an alternative embodiment the fastening mechanism comprises a pressing element adapted for contacting a second side of the wall, in the vicinity of the edge of the opening, in order to co-operate with the collar means for directing a pressing force to the wall, the pressing force being adapted to keep the mounting box in place with relation to the wall.

It will be obvious to a person skilled in the art that the inventive concept can be implemented in various ways. The invention and its embodiments are not limited to the examples described above but may vary within the scope of the claims.

## Claims

1. A mounting box adapted to be installed into an opening in a wall by pushing the mounting box into the opening in the wall from a first side of the wall, the mounting box comprising:
a box case (2) defining a mounting space for accommodating an electrical component, and having a box opening (22) providing in use an access into the mounting space from the first side (41) of the wall (4), and
collar means (6) attached to the box case (2) and adapted to be in contact with the first side (41) of the wall (4), the collar means (6) defining a collar plane adapted to be parallel to a wall plane defined by the wall (4),
**characterized in that** the box case (2) comprises connection means for laterally connecting the mounting box to adjacent identical mounting boxes, the connection means being an integral part of the box case (2), the mounting box comprising a plurality of peripheral connection portions and a plurality of peripheral collar portions on the periphery of the mounting box, each peripheral connection portion comprising a connection member (7) of the connection means, and each peripheral collar portion comprising a collar member (62) of the collar means (6) such that in each of the peripheral connection portions, a corresponding connection member (7) forms the outermost part of the mounting box in the lateral direction, and in each of the peripheral collar portions a corresponding collar member (62) forms the outermost part of the mounting box in the lateral direction.

2. A mounting box according to claim 1, **characterized in that** the mounting box is adapted to be installed into a circular opening in the wall (4) such that the diameter of the circular opening is substantially equal to the maximum diameter of the box case (2).

3. A mounting box according to claim 1 or 2, **characterized in that** the connection means is adapted to laterally connect the mounting box to four adjacent mounting boxes, each one of which is identical to the mounting box itself.

4. A mounting box according to claims 3, **characterized in that** the connection means and the collar means (6) are located such that the collar plane of the mounting box is adapted to coincide with the collar planes of the four adjacent mounting boxes when the mounting box is laterally connected to the four adjacent mounting boxes by means of the connection means.

5. A mounting box according to any one of claims 1 to 4, **characterized in that** each connection member (7) comprises at least one connection projection (72) and at least one connection recess (74) compatible with the at least one connection projection (72).

6. A mounting box according to any one of preceding claims, **characterized in that** an axial dimension of the connection means is greater than an axial dimension of the collar means (6)

7. A mounting box according to any one of preceding claims, **characterized in that** the connection members (7) are evenly spaced along the periphery of the mounting box.

8. A mounting box according to any one of preceding claims, **characterized in that** the connection members (7) and the collar members (62) alternate along the periphery of the mounting box such that between each two peripherally adjacent connection members (7) there is a collar member (62).

9. A mounting box according to any one of preceding claims, **characterized in that** the mounting box comprises a fastening mechanism for fastening the box case (2) into the opening in the wall (4).

10. A mounting box according to any one of preceding claims, **characterized in that** the connection means is manufactured from the same material as the box case (2).

11. A mounting box according to any one of preceding claims, **characterized in that** the collar means (6) is an integral part of the box case (2) and manufactured from the same material as the box case (2).

12. A mounting box according to any one of preceding claims, **characterized in that** the box case (2) comprises a side wall (24) defining a lateral boundary of the mounting space, and a bottom wall (26) defining an axial boundary of the mounting space, the side wall (24) comprising at least one installation aperture (28) adapted to provide a passage for electric wires between exterior of the box case (2) and the mounting space.
